# EUROPEAN PATENT APPLICATION

(11) **EP 1 970 869 A2**
(43) Date of publication of application: **17.09.2008**
(21) Application number: 08152761.6
(22) Date of filing: 14.03.2008
(51) Int. Cl.: G07G 1/01

(54) **Pos terminal apparatus and method of controlling pos teminal apparatus**

(30) Priority: 15.03.2007 JP 2007067439
(71) Applicant: FUJITSU LIMITED, Kawasaki-shi, Kanagawa 211-8588 (JP); Fujitsu Frontech Limited, Inagi-shi, Tokyo 206-8555 (JP)
(72) Inventor: Hokazono, Toki, c/o Fujitsu Frontech Limited, Inagi-shi, Tokyo 206-8555 (JP); Toyokawa, Takashi, c/o Fujitsu frontech limited, Inagi-shi, Tokyo 206-8555 (JP)
(74) Representative: Kreutzer, Ulrich

(57) **Abstract**

In a POS terminal apparatus, a specific commodity is selected (S2) as a reserved commodity from advertised commodities displayed on a display with touch panel for customers during execution of commodity registration processing by a commodity-registration processing section Then, the commodity-registration processing section causes the display with touch panel for customers and a display with touch panel for salesclerks to additionally display details information of the reserved commodity in details spaces of commodity lists displayed on respective screens of the displays. When a subtotal key is depressed, a deposit processing section calculates an amount of a deposit and causes the display with touch panel for customers to display the amount of the deposit. When a total key is depressed (S9), a change calculating section calculates (S10) a change amount. A receipt printing section causes a printing device to print (S12) account settlement contents of purchased commodities and the reserved commodity and reservation indication on a receipt sheet.

## Description

### BACKGROUND OF THE INVENTION

### 1. Field of the Invention

The present invention relates to a point-of-sale (POS) terminal apparatus that performs settlement of accounts for commodities purchased by customers and a method of controlling the POS terminal apparatus, and, more particularly to a POS terminal apparatus that can display various kinds of information for customers and a method of controlling the POS terminal apparatus.

### 2. Description of the Related Art

POS terminals are widely used as checkout systems for settling accounts for commodities purchased by customers. Technologies concerning such POS terminals are disclosed in, for example, Japanese Patent Application Laid-Open Nos. 2001-338345 and 2006-285804. Japanese Patent Application Laid-Open No. 2001-338345 discloses a technology concerning a POS terminal including displays with touch panel provided on both a customer side and a salesclerk (or cashier) side. The POS terminal makes allows a customer and a salesclerk to enter data indicating purchased commodities from both the displays. Japanese Patent Application Laid-Open No. 2006-285804 discloses a technology concerning a POS terminal including a display with touch panel for customers. A customer waiting for settlement of an account selects a commodity on the display with touch panel for customers. Then, the POS terminal outputs a slip on which a barcode concerning the selected commodity is printed and allows the customer to perform settlement of an account for the selected commodity together with settlement of an account for purchased commodities by scanning the barcode with the POS terminal.

However, in the POS terminal disclosed in Japanese Patent Application Laid-Open No. 2001-338345, a customer himself/herself searches for a commodity, which the customer desires to purchase, and inputs the data representing the commodity. Therefore, the POS terminal hardly contributes to a sales promotion effect of advertised commodities and the like planned by a store. The POS terminal disclosed in Japanese Patent Application Laid-Open No. 2006-285804 is effective when registers are crowded and customers are waiting their turns for settlement of accounts. However, when customers are not waiting their turns for settlement of accounts, an opportunity of use of the display touch panel for customers is lost. Therefore, the sale promotion effect cannot be expected.

### SUMMARY OF THE INVENTION

It is an object of the present invention to at least partially solve the problems in the conventional technology.

According to an aspect of the present invention, a POS terminal apparatus includes a customer display device that displays information for a customer; an advertised-commodity displaying section that displays advertised commodity information for the customer on the customer display device; a commodity-registration processing section that performs commodity registration processing for reading information concerning a purchased commodity purchased by the customer and calculating a payment amount corresponding to the purchased commodity; a storing section that stores, when a selection signal indicating that a specific commodity is selected from the advertised commodity information displayed on the customer display device is received during execution of the commodity registration processing, reserved commodity information concerning the specific commodity in a memory; and a printing section that prints, when a finalization signal indicating that the commodity registration processing is finalized is received, on a receipt sheet, the reserved commodity information stored in the memory and reservation indication indicating that a commodity corresponding to the reserved commodity information is the reserved commodity.

According to another aspect of the present invention, a method for controlling a POS terminal apparatus having a customer display device that displays information for a customer, includes displaying advertised commodity information for the customer on the customer display device; performing commodity registration processing that reads information concerning a purchased commodity purchased by the customer and calculates a payment amount corresponding to the purchased commodity; storing, when a selection signal indicating that a specific commodity is selected from the advertised commodity information displayed on the customer display device is received during execution of the commodity registration processing, reserved commodity information concerning the specific commodity in a memory; and printing, when a finalization signal indicating that the commodity registration processing is finalized is received, on a receipt sheet, the reserved commodity information stored in the memory and reservation indication indicating that a commodity corresponding to the reserved commodity information is the reserved commodity.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a diagram of a system configuration of a POS system according to a first embodiment of the present invention;
Fig. 2 is a diagram of the structure of a selling-floor POS terminal according to the first embodiment;
Figs. 3A and 3B are diagrams of examples of display screens displayed on displays according to the first embodiment;
Figs. 4A to 4D are diagrams of an example of screen transition of display screens according to the first embodiment;
Fig. 5 is a diagram of an example of print of a receipt according to the first embodiment;
Fig. 6 is a flowchart of a processing procedure of the selling-floor POS terminal according to the first embodiment;
Figs. 7A and 7B are diagrams of an example of print of receipts according to a modification to the first embodiment;
Figs. 8A and 8B are diagrams of an example of screen transition of display screens according to a second embodiment of the present invention;
Figs. 9A and 9B are diagrams of an example of print of receipts according to the second embodiment;
Fig. 10 is a flowchart showing a processing procedure of a selling-floor POS terminal according to the second embodiment; and
Fig. 11 is an external view of the selling-floor POS terminal according to the first embodiment.

### DETAILED DESCRIPTION OF THE PREFERRED EMBODIMENTS

Exemplary embodiments of the present invention are explained in detail below with reference to the accompanying drawings.

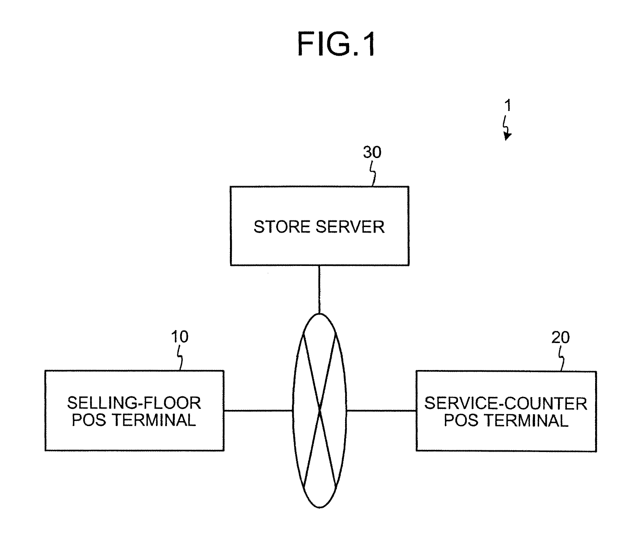

Fig. 1 is a diagram of a system configuration of a POS system according to a first embodiment of the present invention. As shown in Fig.1, a POS system 1 is built in a store and includes a selling-floor POS terminal 10, a service-counter POS terminal 20, and a store server 30.

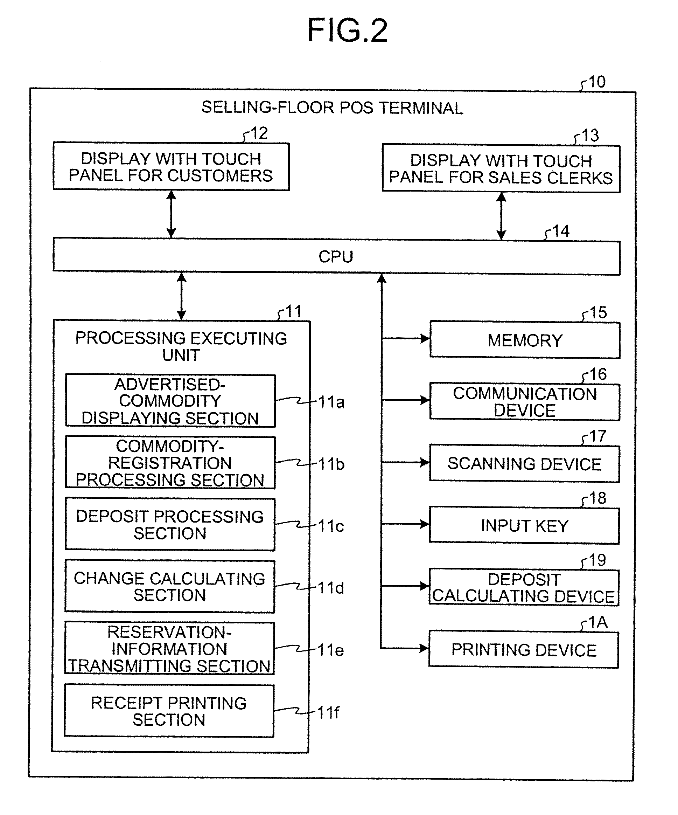

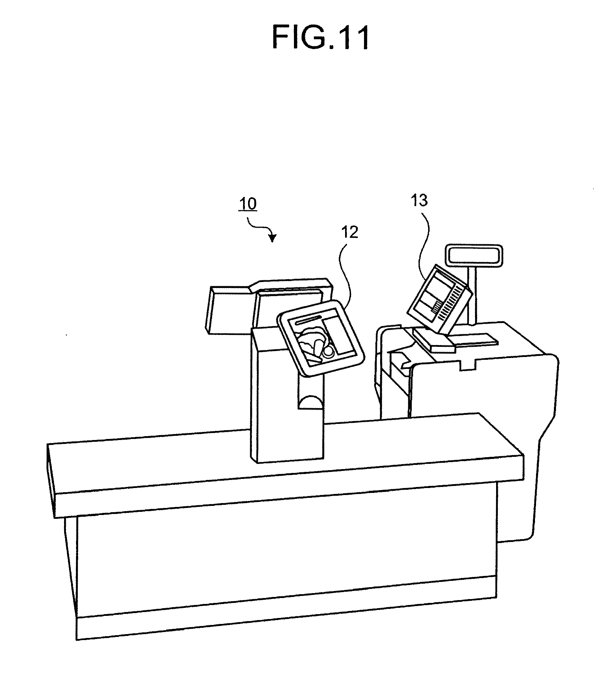

The selling-floor POS terminal 10 is set in a selling floor or the like of a store and performs settlement of accounts for commodities purchased by customers. Fig. 2 shows a diagram of the structure of the selling-floor POS terminal 10 and Fig. 11 shows an external view of the selling-floor POS terminal 10. As shown in Figs.2 and 11, the selling-floor POS terminal 10 physically includes a display 12 with touch panel for customers (a display device for customers), a display 13 with touch panel for salesclerks, a central processing unit (CPU) 14, a memory 15, a communication device 16 such as a communication interface, a scanning device 17 such as a barcode scanner, an input key 18 such as a keyboard, a deposit calculating device 19, which accepts a cash payment made by the customer and dispenses cash by way of change, and a printing device 1A such as a printer. The selling-floor POS terminal 10 functionally includes a processing executing unit 11. The processing executing unit 11 controls the selling-floor POS terminal 10 when the CPU 14 executes a program stored in the memory 15. Details of the processing executing unit 11 are explained later.

The service-counter POS terminal 20 is set in a service counter where a reserved commodity reserved for purchase by a customer is delivered. The service-counter POS terminal 20 physically includes a display, a CPU, a memory, a communication device, a scanning deice, an input key, a change input device, and a printing device.

The store server 30 stores therein information concerning purchased commodities and reserved commodities received from the selling-floor POS terminal 10. The store server 30 physically includes a CPU, a memory, and a communication device.

The functional structure of the selling-floor POS terminal 10 according to the first embodiment is explained referring to Fig. 2. As shown in Fig.2, the selling-floor POS terminal 10 includes the processing executing unit 11. The processing executing unit 11 detects operation instruction signals input via various input devices such as an input key, a touch panel, and a scanning device and executes various kinds of processing corresponding to the operation instruction signals. Examples of the various kinds of processing include advertised commodity display processing, commodity registration processing, deposit processing, change calculation processing, reservation information transmission processing, and receipt print processing.

The advertised commodity display processing is processing for presenting advertised commodity information concerning advertised commodities planned by the store to a customer. The commodity registration processing is processing for adding up payment amounts corresponding to purchased commodities of the customer using information concerning the purchased commodities of the customer scanned by the scanning device 17 in order. The deposit processing is processing for identifying a denomination of a deposit input from the deposit calculating device 19 and calculating an amount of the deposit. The change calculation processing is processing for calculating an amount of change using a total of the payment amounts and the deposit amount. The reservation information transmission processing is processing for transmitting reserved commodity information concerning a product reserved by the customer to the store server 30. The receipt print processing is processing for printing contents of settlement of an account on a receipt sheet.

As functions for executing these kinds of processing, the processing executing unit 11 includes an advertised-commodity displaying section 11a, a commodity-registration processing section 11b, a deposit processing section 11c, a change calculating section 11d, a reservation-information transmitting section 11e, and a receipt printing section 11f.

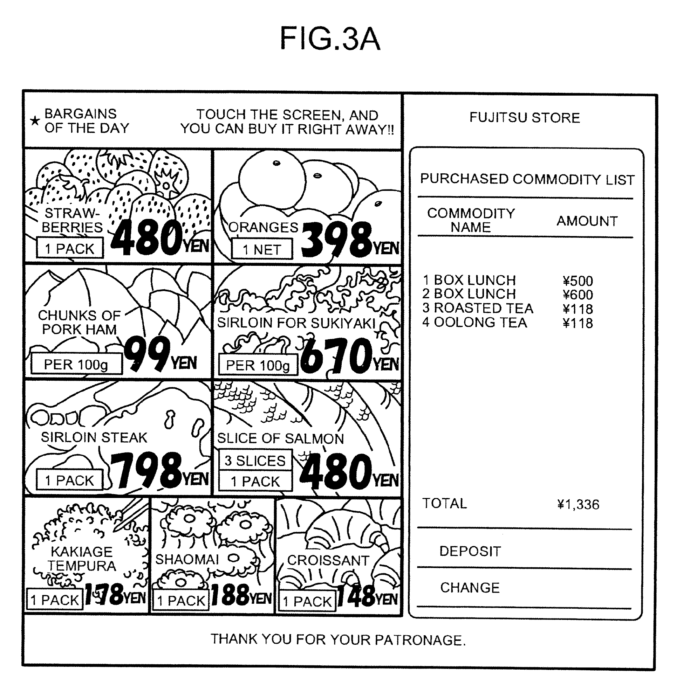

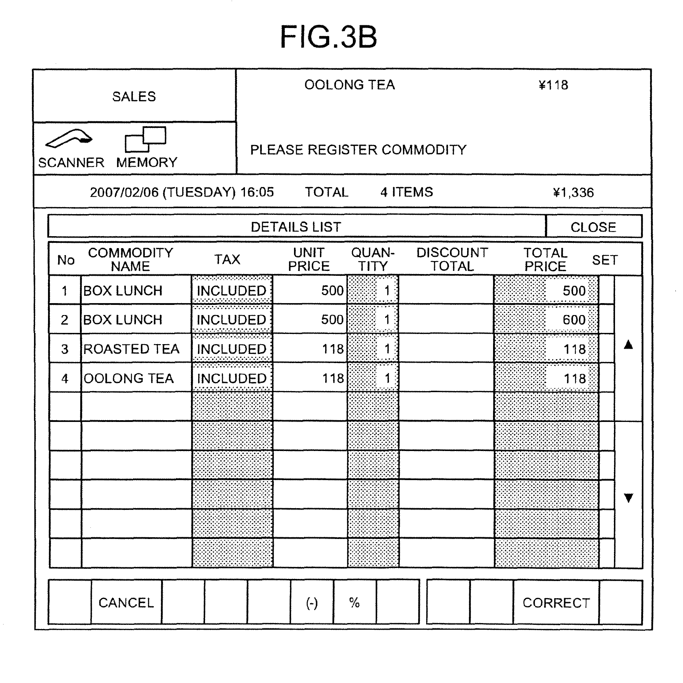

The advertised-commodity displaying section 11a causes the display 12 with touch panel for customers to display advertised commodity information for customers. The advertised commodity information is registered in the memory 15 in advance. For example, advertisement numbers, commodity names, commodity prices, and commodity images for uniquely specifying advertised commodities correspond to the advertised commodity information. Figs. 3A and 3B are diagrams of examples of display screens displayed on the respective displays. Fig. 3A is a diagram of an example of a display screen displayed on the display 12 with touch panel for customers. As shown in Fig. 3A, on the left side of the display screen, a plurality of advertised commodities are displayed with commodities images, commodity names, and commodity prices of the respective advertised commodities. During the commodity registration processing, when a user touches and selects any one of the advertised commodities displayed on the display screen, the selected commodity is specified as a reserved commodity and an account for the reserved commodity is settled.

The commodity-registration processing section 11b causes, using purchased commodity information scanned by the scanning device 17, the display 12 with touch panel for customers and the display 13 with touch panel for salesclerks to additionally display details information in details spaces of commodity lists displayed on the displays. The purchased commodity information is included in barcodes attached to commodities. The purchased commodity information includes commodity numbers, commodity names, and commodity prices for uniquely identifying purchased commodities. In the commodity lists displayed on the respective displays, for example, details information including commodity names and commodity prices, total amounts, deposit amounts, change amounts, and the like are displayed.

As shown in Fig. 3A, a commodity list is displayed on the right side of the display screen. In the commodity list, a details information space including a commodity name and a commodity price, a total amount space, a deposit amount space, and a change amount space are provided. Fig. 3B is a diagram of an example of a display screen displayed on the display with touch panel for salesclerks. As shown in Fig. 3B, a commodity list is displayed on the display screen. In the commodity list, a details information space including a commodity name, a commodity unit price, a quantity, and a total amount for each commodity and a total amount space are provided.

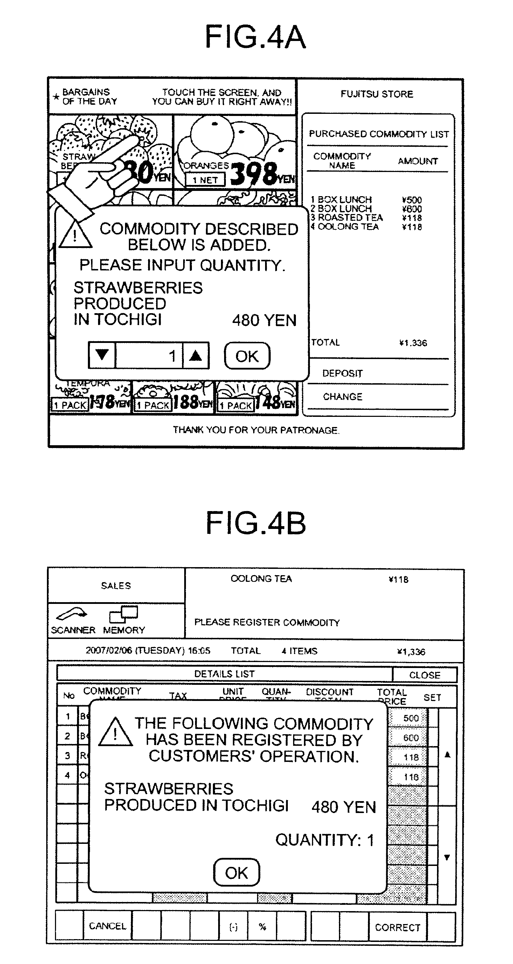

A specific commodity is selected from the advertised commodities displayed on the display 12 with touch panel for customers. Then, the commodity-registration processing section 11b causes, using advertised commodity information corresponding to the selected commodity, the display 12 with touch panel for customers to additionally display details information in the details information space of the commodity list. Figs. 4A to 4D are diagrams of an example of screen transition of display screens according to the first embodiment. In Figs. 4A to 4D, screen transition diagrams of the respective displays at the time when a specific commodity is selected from advertised commodities are shown. Fig. 4A is a diagram of an example of a screen displayed when a specific commodity is selected on the display 12 with touch panel for customers. As shown in Fig.4A, when the user touches and selects a specific commodity from advertised commodities displayed on the screen, a pop-up screen is displayed on the display screen. On the pop-up screen, a message "The commodity described below is added. Please input a quantity.", a quantity input space in which a commodity name and a price "strawberries produced in Tochigi, 480 yen", and a quantity are input, and an "OK button" that the user touches when the user decides the contents are displayed. When the "OK button" is touched, a selection signal indicating that "strawberries produced in Tochigi" is selected is transmitted.

Fig. 4B is a diagram of an example of a screen displayed on the display 13 with touch panel for salesclerks after the "OK button" is touched on the pop-up screen shown in Fig. 4A. As shown in Fig. 4B, a pop-up screen is displayed on the display screen. On the pop-up screen, a message "The following commodity has been registered by customers' operation.", a commodity name, a price, and a quantity "strawberries produced in Tochigi, 480 yen, quantity: 1", and an "OK button" are displayed.

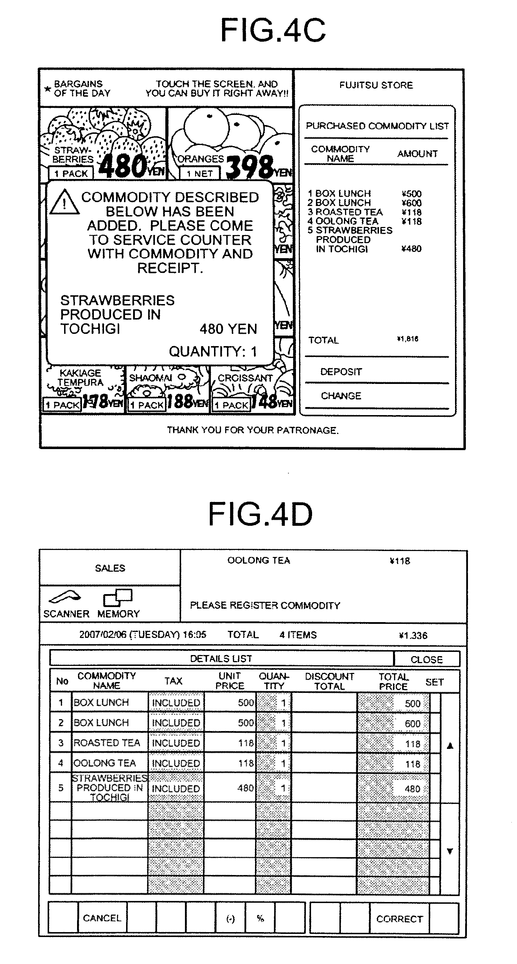

Fig. 4C is a diagram of an example of a screen displayed on the display 12 with touch panel for customers after the "OK button" is touched on the pop-up screen shown in Fig. 4B. As shown in Fig.4C, a pop-up screen is displayed on the display screen. On the pop-up screen, a message "The following commodity has been added. Please come to the service counter with the commodity and a receipt." and a commodity name, a price, and a quantity "Strawberries produced in Tochigi, 480 yen, quantity: 1" are displayed. In the commodity list on the display screen, details information in which "strawberries produced in Tochigi" and "480" are stored in the commodity name and the price, respectively, is additionally displayed.

Fig. 4D is a diagram of an example of a screen displayed 13 on the display with touch panel for salesclerks after the "OK button" is touched on the pop-up screen shown in Fig. 4B. As shown in Fig. 4D, in the commodity list on the display screen, details information in which "strawberries produced in Tochigi", "480", "1", and "480" are stored in the commodity name, the unit price, the quantity, and the total price, respectively, is additionally displayed.

When the specific commodity is selected in this way, it is possible to settle an account for the reserved commodity simultaneously with settlement of accounts for the purchased commodities by additionally displaying the details information of the selected commodity in the details space of the commodity list. Therefore, it is possible to improve the sales promotion effect because the store can surely sell the reserved commodity. On the other hand, it is possible to improve convenience for the customer because the customer can quickly and easily receive the reserved commodity.

The commodity-registration processing section 11b receives the selection signal transmitted when the user touches the "OK" button. Then, the commodity-registration processing section 11b generates, using the advertised commodity information of the commodity selected from the advertised commodities displayed on the display 12 with touch panel for customers, reserved commodity information and causes the memory 15 to store the reserved commodity information. The reserved commodity information includes a commodity number, a commodity name, a commodity price, and a quantity. By causing the memory 15 to store the reserved commodity information, it is possible to treat the commodity selected from the advertised commodities displayed on the display 12 with touch panel for customers as a reserved commodity that the customer has not received yet. In other words, it is possible to cause the customer to easily identify the reserved commodity and the purchased commodities.

When a subtotal key included in the input key 18 is depressed, the deposit processing section 11c identifies a denomination of a deposit input from the deposit calculating device 19, calculates an amount of the deposit, and causes the display with touch panel 12 for customers to display the amount of the deposit in the deposit space of the commodity list.

When a total key included in the input key 18 is depressed, the change calculating section 11d calculates a change amount using the total of payment amounts and the deposit amount and causes the display 12 with touch panel for customers to display the change amount in the change amount space of the commodity list. When the total key is depressed, a finalization signal indicating that the commodity registration processing is finalized is transmitted. Therefore, when the finalization signal is received, the change calculating section 11d calculates a change amount.

When the total key included in the input key 18 is depressed, the reservation-information transmitting section 11e transmits the reserved commodity information stored in the memory 15 to the store server 30. Consequently, the store server 30 can manage the reserved commodity information. Therefore, in the store, the salesclerks can share and effectively use the reserved commodity information. As an example of the effective use, the reserved commodity information is provided from the store server 30 to the service-counter POS terminal 20. Specifically, for example, when the customer brings a receipt to the service counter, the service-counter POS terminal 20 reads a slip number of the receipt and transmits the slip number to the store server 30 to acquire the reserved commodity information from the store server 30. Consequently, the service-counter POS terminal 20 can cause the display to display the information concerning the reserved commodity using the acquired reserved commodity information. Therefore, a salesclerk can bring the commodity displayed on the display from a display shelf and pass the commodity to the customer.

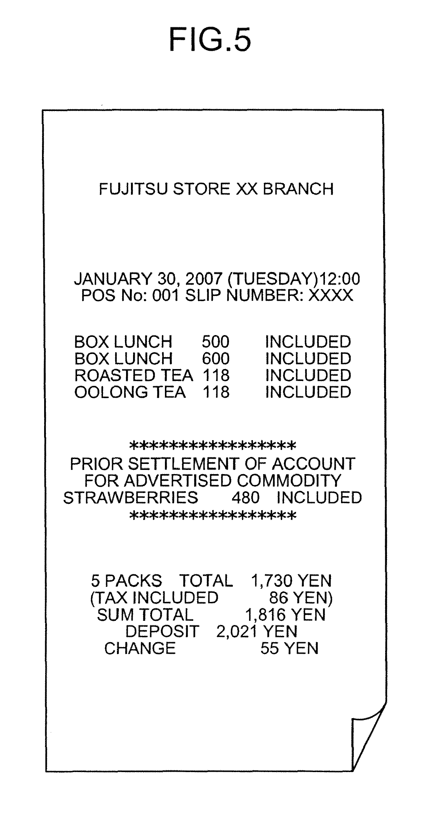

When the commodity registration processing is finalized and a change amount is displayed in the change amount space, the receipt printing section 11f causes the printing device 1A to output a receipt printed by using the information stored in the commodity list. Fig. 5 is a diagram of an example of print of a receipt according to the first embodiment. As shown in Fig. 5, for example, a store name, a commodity purchase date and time, a POS terminal number, a slip number, a commodity name, a commodity price, a total amount, a change amount, and a change amount are printed on the receipt. When a reserved commodity is included in the details information, for example, a reserved commodity name, a reserved commodity price, and reservation indication indicating the reserved commodity are further printed. In the receipt shown in Fig. 5, "prior settlement of an account for an advertised commodity" is displayed as the reservation indication.

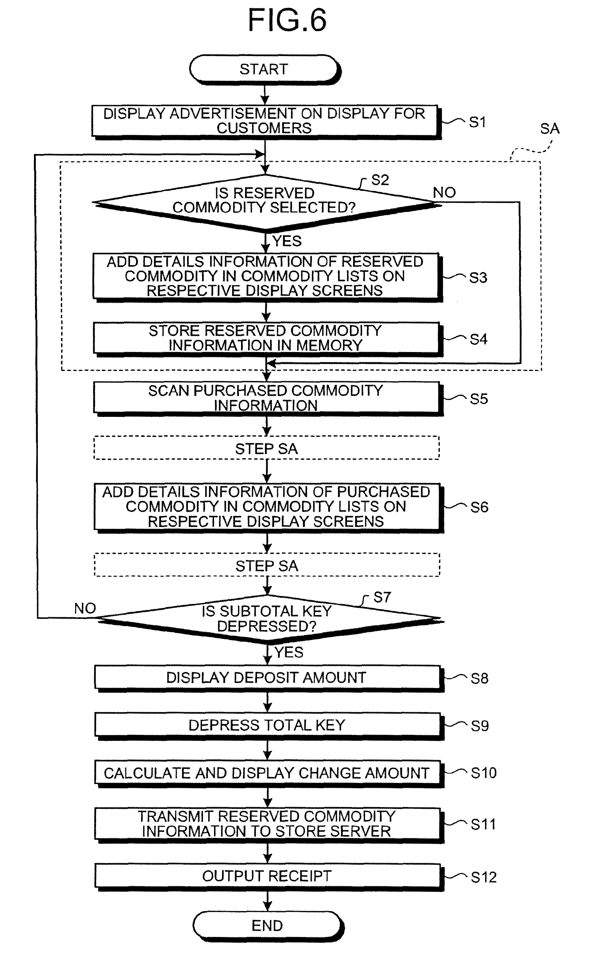

Fig. 6 is a flowchart of a processing procedure of the selling-floor POS terminal according to the first embodiment. In the processing procedure, an account for a purchased commodity is settled for each customer.

First, the advertised-commodity displaying section 11a of the selling-floor POS terminal 10 reads out the advertised commodity information registered in the memory 15 and causes the display 12 with touch panel for customers to display an advertisement (step S1).

Subsequently, a specific commodity is selected from advertised commodities displayed on the display 12 with touch panel for customers as a reserved commodity ("YES" at step S2). The commodity-registration processing section 11b causes, using the advertised commodity information corresponding to the reserved commodity, the display 12 with touch panel for customers and the display 13 with touch panel for salesclerks to additionally display details information of the reserved commodity in the details spaces of the commodity lists displayed on the respective screens of the displays (step S3). The commodity-registration processing section 11b generates reserved commodity information using the advertised commodity information of the reserved commodity and causes the memory 15 to store the reserved commodity information (step S4). The processing at steps S2 to S4 can be executed at any time as interrupt processing (step SA) performed in commodity registration processing (steps S5 to S6 described later) started after step S1.

Purchase commodity information is scanned from a barcode of a purchased commodity by the scanning device 17 (step S5). Then, the commodity-registration processing section 11b causes, using the purchased commodity information, the display 12 with touch panel for customers and the display 13 with touch panel for salesclerks to additionally display details information of the purchased commodity in the details spaces of the commodity lists displayed on the respective screens of the displays (step S6).

The commodity-registration processing section 11b repeats the commodity registration processing (steps S5 to S6) including the interrupt processing (step SA) until the subtotal key is depressed. On the other hand, when the subtotal key is depressed ("YES" at step S7), the deposit processing section 11c identifies a denomination of a deposit input from the deposit calculating device 19, calculates an amount of the deposit, and causes the display 12 with touch panel for customers to additionally display the amount in the deposit space of the commodity list displayed on the respective screen of the display (step S8).

When the total key is depressed (step S9), the change calculating section 11d causes the display 12 with touch panel for customers to display a change amount in the change amount space of the commodity list displayed on the screen of the display (step S10). The reservation-information transmitting section 11e reads out the reserved commodity information stored in the memory 15 and transmits the reserved commodity information to the store server 30 (step S11).

The receipt printing section 11f causes the printing device 1A to output a receipt on which account settlement contents of the purchased commodity and the reserved commodity and a reservation indication are printed (step S12).

The customer who receives the receipt can receive the reserved commodity by presenting the receipt to the service counter. As a method of receiving the reserved commodity, various methods can be applied. For example, first, the service-counter POS terminal 20 reads a slip number of the receipt. Subsequently, the service-counter POS terminal 20 acquires the reserved commodity information, which is stored in the memory of the store server 30 in association with the slip number, from the store server 30. The service-counter POS terminal 20 causes, using the acquired reserved commodity information, to display information concerning the reserved commodity on the display of the service-counter POS terminal 20. Consequently, a salesclerk can bring the commodity displayed on the display and pass the commodity to the customer.

As described above, in the selling-floor POS terminal 10 according to the first embodiment, when a specific commodity is selected from advertised commodity information displayed on the display 12 with touch panel for customers while the commodity registration processing is executed in the terminal, it is possible to cause the display 12 with touch panel for customers and the display 13 with touch panel for salesclerks to additionally display information concerning the specific commodity in the details space of the commodity lists and cause the memory 15 to store the information as reserved commodity information. When the commodity registration processing is finalized, it is possible to cause the printing device 1A to print, on a receipt sheet, the reserved commodity information stored in the memory 15 and reservation information indicating that a commodity corresponding to the reserved commodity information is a reserved commodity. Consequently, it is possible to cause, after causing the customer to select an advertised commodity in the selling-floor POS terminal 10 that is settling accounts for purchased commodities, the printing device 1A to print, on a receipt, reservation indication indicating that the advertised commodity is a reserved commodity. Therefore, the customer can receive the reserved commodity by presenting the receipt to the store. Therefore, even when customers are not waiting for their turns for settlement of accounts, the store can improve the sales promotion effect and it is possible to improve convenience for customers.

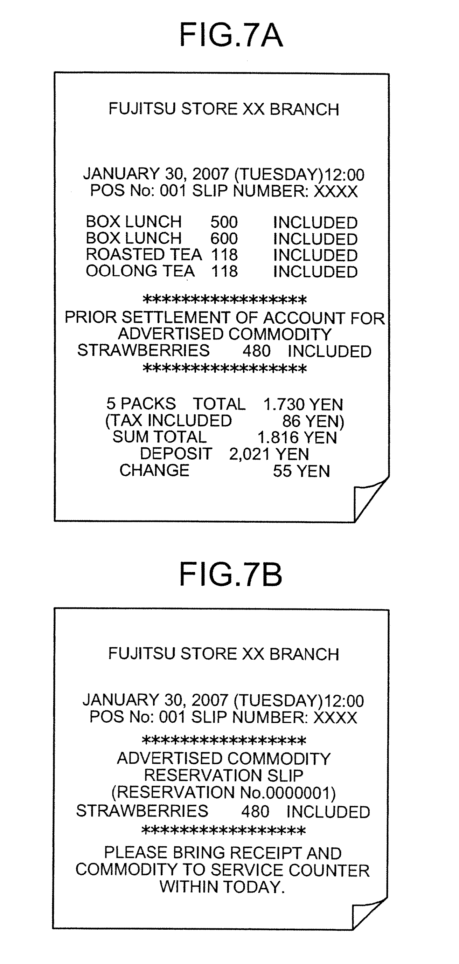

In the first embodiment, one receipt is issued. However, a plurality of receipts can be issued. Figs. 7A and 7B are diagrams of an example of print of receipts according to a modification to the embodiment. In the example of print, two receipts are issued. As shown in Figs. 7A, on a first (upper) receipt, contents same as those on the receipt (see Fig. 5) according to the first embodiment are printed. As shown in Figs. 7B, on a second (lower) receipt, for example, a store name, a commodity purchase date and time, a POS terminal number, a slip number, a reserved commodity name, a commodity price, and reservation indication indicating a reserved commodity are printed. On the receipts shown in Figs. 7A and 7B, as the reservation indication, "advertised commodity reservation slip (reservation No. 0000001)" and "please bring the receipt and the commodities to the service counter within today." are displayed. By outputting such two receipts, it is possible to issue the second receipt as a reservation slip. Therefore, it is possible to improve convenience for users.

A second embodiment of the present invention is different from the first embodiment in that, whereas settlement of an account for a reserved commodity is performed when accounts for purchased commodities are settled, in the second embodiment, settlement of an account for a reserved commodity is not performed when accounts for purchased commodities are settled. Specifically, in the second embodiment, after settlement of the accounts for the purchased commodities, the account for the reserved commodity is settled at the service counter when the customer actually receives the reserved commodity. Because of this difference, a part of the functions of the commodity-registration processing section 11b and the receipt printing section 11f of the selling-floor POS terminal 10 are different from the functions of the commodity-registration processing section 11b and the receipt printing section 11f of the selling-floor POS terminal 10 according to the first embodiment. Otherwise, a system configuration of the POS system 1 and the structure of the selling-floor POS terminal 10 are the same as the system configuration of the POS system 1 (see Fig. 1) and the structure of the selling-floor POS terminal 10 (see Fig. 2) according to the first embodiment. Therefore, components same as those in the first embodiment are denoted by the same reference numerals and detailed explanation of the components will not be repeated here. Differences from the first embodiment are mainly explained below.

The commodity-registration processing section 11b functions in the same manner as the first embodiment in causing the display 12 with touch panel for customers and the display 13 with touch panel for salesclerks to additionally display details information in the details spaces of the commodity lists displayed on the displays and generating reserved commodity information and causing the memory 15 to store the reserved commodity information.

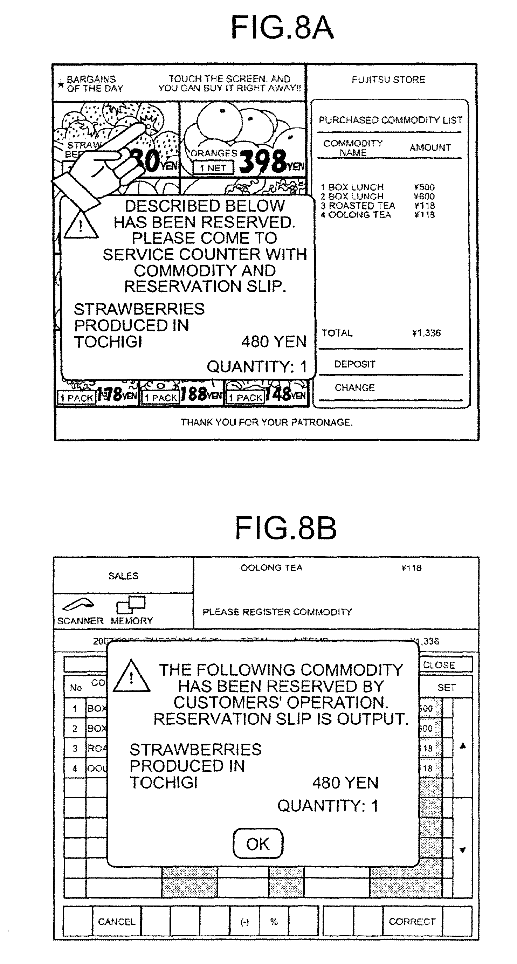

A specific commodity is selected from advertised commodities displayed on the display 12 with touch panel for customers. The commodity-registration processing unit 11b causes, using advertised commodity information corresponding to the selected commodity, the display 12 with touch panel for customers and the display 13 with touch panel for salesclerks to display messages indicating that reservation for a reserved commodity is received. Figs. 8A and 8B are diagrams of an example of screen transition of display screens according to the second embodiment. In Figs. 8A and 8B, screen transition diagrams of the respective displays at the time when a specific commodity is selected from advertised commodities are shown. Fig. 8A is a diagram of an example of a screen displayed when a specific commodity is selected on the display 12 with touch panel for customers. As shown in Fig. 8A, when the customer touches and selects a specific commodity from advertised commodities displayed on the screen, a pop-up screen is displayed on the display screen. On the pop-up screen, a message indicating that reservation for a reserved commodity is received, "The following commodity has been reserved. Please come to the service counter with the commodity and the reservation slip.", and a commodity name, a price, and a quantity "strawberries produced in Tochigi, 480 yen, quantity: 1" are displayed.

Fig. 8B is a diagram of an example of a screen displayed on the display 13 with touch panel for salesclerks after the specific commodity is selected on the display shown in Fig. 8A. As shown in Fig. 8B, a pop-up screen is displayed on the display screen. On the pop-up screen, a message "The following commodity has been reserved by customers' operation. A reservation slip is output.", a commodity name, a price, and a quantity "strawberries produced in Tochigi, 480 yen, quantity: 1", and an "OK button" are displayed.

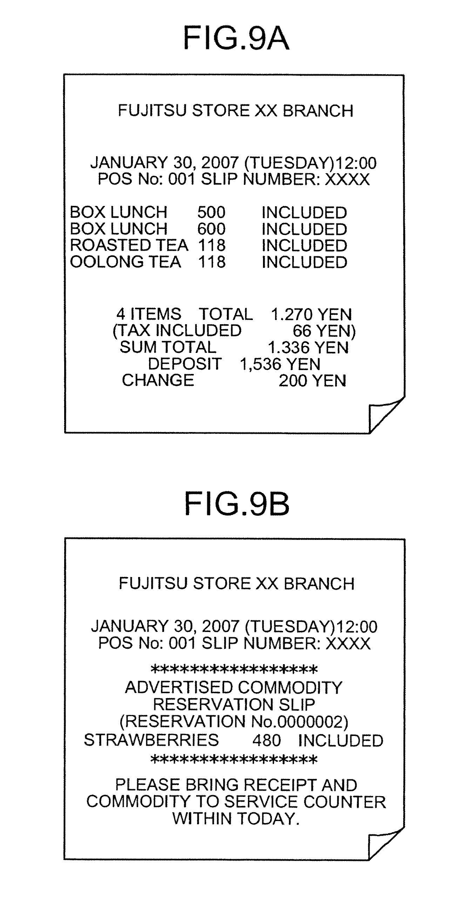

The receipt printing section 11f causes the printing device 1A to output a receipt printed by using the information stored in the commodity list and a receipt as a reservation slip printed by using the reserved commodity information stored in the memory 15. Figs. 9A and 9B are diagrams of an example of printed receipts according to the second embodiment. In Figs. 9A and 9B, an example of a receipt and a reservation slip is shown. As shown in Fig. 9A, on the receipt (on the upper side), for example, a store name, a commodity purchase date and time, a POS terminal number, a slip number, a commodity name, a commodity price, a total amount, a deposit amount, and a change amount are printed. As shown in Fig. 9B, on the reservation slip (on the lower side), for example, the store name, the commodity purchase date and time, the POS terminal number, a slip number, a reserved commodity name, a commodity price, and reservation indication indicating a reserved commodity are printed. In the reservation slip shown in Fig. 9B, "advertised commodity reservation slip (reservation No. 0000002) and "Please bring the receipt and the commodity to the service counter within today." are displayed as the reservation indication.

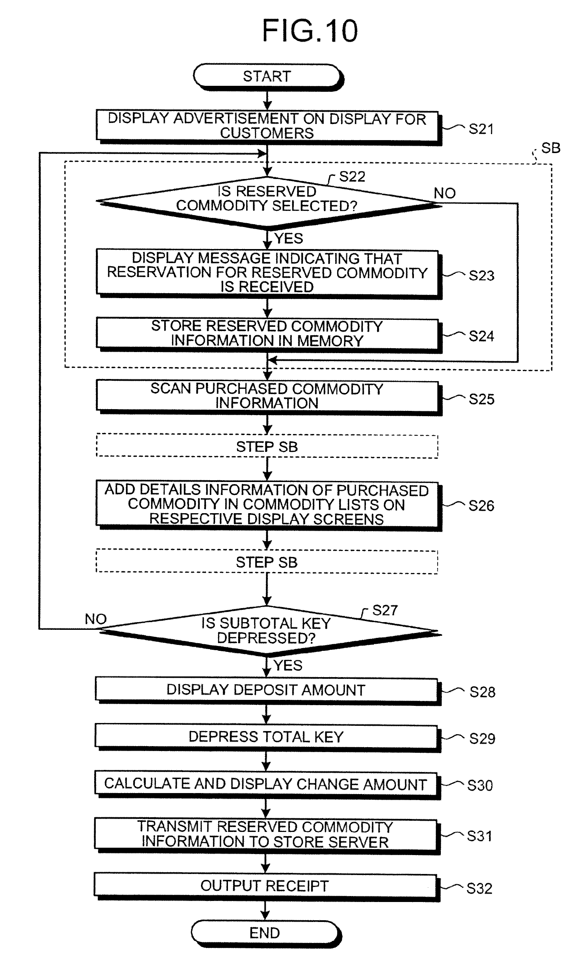

Fig. 10 is a flowchart of a processing procedure of the selling-floor POS terminal 10 according to the second embodiment. Respective kinds of processing other than those at steps S23 and S32 are the same as the respective kinds of processing (see Fig. 6) other than those at steps S3 and S12 described in detail in the first embodiment, respectively. Therefore, only the respective kinds of processing at steps S23 and S32 different from the processing according to the first embodiment are explained below.

First, a specific commodity is selected from advertised commodities displayed on the display 12 with touch panel or customers as a reserved commodity ("YES" at step S22). The commodity-registration processing section 11b causes, using advertised commodity information corresponding to the reserved commodity, the display 12 with touch panel for customers and the display 13 with touch panel for salesclerks to display messages indicating that reservation for the reserved commodity is received (step S23).

The receipt printing section 11f causes the printing device 1A to output a receipt on which account settlement contents of purchased commodities are printed and a receipt as a reservation slip on which the reserved commodity and a reservation indication are printed (step S32).

As described above, in the selling-floor POS terminal 10 according to the second embodiment, when a specific commodity is selected from advertised commodity information displayed on the display 12 with touch panel for customers while the commodity registration processing is executed in the terminal, it is possible to cause the memory 15 to store information concerning the specific commodity as reserved commodity information. When the commodity registration processing is finalized, it is possible to cause the printing device 1A to print, on a receipt sheet, the reserved commodity information stored in the memory 15 and reservation indication indicating that a commodity corresponding to the reserved commodity information is the reserved commodity. Consequently, it is possible to cause, after causing the customer to select an advertised commodity in the selling-floor POS terminal 10 that is settling accounts for purchased commodities, the printing device 1A to print, on a receipt, reservation indication indicating that the advertised commodity is a reserved commodity. Therefore, the customer can receive the reserved commodity by presenting the receipt to the store and setting an account for the reserved commodity. Therefore, even when customers are not waiting for their turns for settlement of accounts, the store can improve the sales promotion effect for advertised commodities and the like.

According to the embodiments of the present invention, when a specific commodity is selected from advertised commodity information displayed on the display device for customers while the commodity registration processing is executed in the POS terminal apparatus, information concerning the specific commodity can be stored in the memory as reserved commodity information. When the commodity registration processing is finalized, it is possible to cause the printing device to print, on a receipt sheet, the reserved commodity information stored in the memory and reservation indication indicating that the commodity corresponding to the reserved commodity information is a reserved commodity. Consequently, it is possible to cause, after causing a customer to select an advertised commodity on the POS terminal apparatus that is settling an account for purchased commodities, the printing device to print, on a receipt, the reservation indication indicating that the advertised commodity is an advertised commodity. The customer can receive the reserved commodity by presenting the receipt to a store.

According to the embodiments of the present invention, it is possible to settle an account for a reserved commodity simultaneously with settlement of an account for purchased commodities. Therefore, the store can surely sell reserved commodities and further improve the sales promotion effect. On the other hand, the customer can more quickly and easily receive the reserved commodity because the customer does not have to join a line of customers at a register again to purchase the reserved commodity. Therefore, it is possible improve convenience for customers.

According to the embodiments of the present invention, it is possible to use a receipt, on which reserved commodity information and reservation indication are printed, as a reservation slip. Therefore, it is possible to improve convenience for customers.

According to the embodiments of the present invention, it is possible to manage the reserved commodity information using the server on the outside. Therefore, the store can share and effectively use the reserved commodity information among salesclerks.

In short, according to the embodiments of the present invention, even when customers are not waiting for their turns for settlement of accounts, there is an effect that it is possible to improve the sales promotion effect for advertised commodities and the like.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A POS terminal apparatus (10) comprising:
a customer display device (12) that displays information for a customer;
an advertised-commodity displaying unit (11a) that displays advertised commodity information for the customer on the customer display device;
a commodity-registration processing unit (11b) that performs commodity registration processing for reading information concerning a purchased commodity purchased by the customer and calculating a payment amount corresponding to the purchased commodity;
a storing unit that stores, when a selection signal indicating that a specific commodity is selected from the advertised commodity information displayed on the customer display device is received during execution of the commodity registration processing, reserved commodity information concerning the specific commodity in a memory; and
a printing unit (1A) that prints, when a finalization signal indicating that the commodity registration processing is finalized is received, on a receipt sheet, the reserved commodity information stored in the memory and reservation indication indicating that a commodity corresponding to the reserved commodity information is the reserved commodity.

2. The POS terminal apparatus according to claim 1, wherein the commodity-registration processing unit performs the commodity registration processing for the specific commodity in addition to the purchased commodity.

3. The POS terminal apparatus according to claim 1, wherein the printing unit prints the reserved commodity information and the reservation indication on a receipt sheet different from a receipt sheet on which a result of the commodity registration processing is printed.

4. The POS terminal apparatus according to claim 1, further comprising a transmitting unit (16) that transmits the reserved commodity information stored in the memory to a server on an outside.

5. A method for controlling a POS terminal apparatus having a customer display device that displays information for a customer, the method comprising:
displaying (S1) advertised commodity information for the customer on the customer display device;
performing (S2) commodity registration processing that reads information concerning a purchased commodity purchased by the customer and calculates a payment amount corresponding to the purchased commodity;
storing (S3), when a selection signal 1 indicating that a specific commodity is selected from the advertised commodity information displayed on the customer display device is received during execution of the commodity registration processing, reserved commodity information concerning the specific commodity in a memory; and
printing (S12), when a finalization signal indicating that the commodity registration processing is finalized is received, on a receipt sheet, the reserved commodity information stored in the memory and reservation indication indicating that a commodity corresponding to the reserved commodity information is the reserved commodity.

6. The method according to claim 5, further comprising performing the commodity registration processing for the specific commodity in addition to the purchased commodity.

7. The method according to claim 5, further comprising printing the reserved commodity information and the reservation indication on a receipt sheet different from a receipt sheet on which a result of the commodity registration processing is printed.

8. The method according to claim 5, further comprising transmitting (S11) the reserved commodity information stored in the memory to a server on an outside.
